# EUROPEAN PATENT SPECIFICATION

(11) **EP 1 650 081 B1**
(45) Date of publication and mention of the grant of the patent: **11.08.2010**
(21) Application number: 05256606.4
(22) Date of filing: 25.10.2005
(51) Int. Cl.: B60R 5/04, F16C 29/04

(54) **Sliding supports**
Gleitschienen
Guidage à glissière

(30) Priority: 25.10.2004 GB 0423650
(43) Date of publication of application: 26.04.2006
(73) Proprietor: Accuride International Limited, Northampton NN4 7AS (GB)
(72) Inventor: Craddock, Andrew Neil, Corby Northamptonshire NN18 8PL (GB)
(74) Representative: Howick, Nicholas Keith

(56) References cited:
- EP-A- 1 095 818
- WO-A-02/00466
- DE-A1- 4 334 373
- GB-A- 738 944
- GB-A- 1 304 225
- GB-A- 2 239 339
- US-A- 2 797 828
- US-A- 5 810 301

## Description

The present invention relates to sliding supports, and more particularly but not exclusively to sliding supports for use in supporting slidable luggage trays for vehicles.

Pull out luggage trays for luggage spaces in vehicles are known. For example, US Patent Specification No. 5,064,335 discloses an apparatus for assisting in the loading and unloading of cargo into a luggage space. The apparatus comprises a pair of C-shaped supports secured in parallel at either side of the cargo space of a delivery vehicle with mutually facing open channels. A rectangular platform is provided having parallel, longitudinal, outwardly opening C-shaped channel edges which engage the C-shaped supports secured in the cargo space. The platform is moveable from an extended to a retracted position. Rollers are rotatably secured to the C-shaped channel and the C-shaped supports along the edges of the platform to allow easy sliding movement of the platform.

Another approach has been to support a sliding luggage tray on rollers mounted in the vehicle loading bay, for example as shown in US Patent Specification No. 3132755.

In the loading bay of a vehicle, it is desirable to maximise the volume of available luggage space. Accordingly, it is undesirable to waste space with bulky mechanisms for sliding the luggage tray out of the luggage space, and the aim of this invention is to provide a reliable and simple sliding support which occupies a small amount of space, especially height.

WO 02/00466 discloses a sliding support according to the preamble of claim 1, having a body portion situated within a channel section. The body portion is provided with stub axles on which rollers are journaled. The rollers run along a bottom wall of the channel section. DE 43 34 373 A1 discloses a device for moving a component which includes a body portion mounted on rollers and an elastic wiper mounted at the front and rear edges of the body portion.

According to the invention, there is provided a sliding support as recited in the claims.

The block may include a plurality of rollers for contacting the load support surface of the support element.

The sliding support preferably includes a plurality of spaced apart blocks for securement in use to the second body.

The load support surface of the support element may be planar.

The support element is of channel section, having a base which provides the load support surface.

The channel section preferably includes side walls which converge towards their free edges, the block being retained by engagement within the channel section such that material of the block engages the side walls of the channel.

The or each roller may be formed from a plastics material, for example, Nylon or Polyethylene.

The block may include a recess, the roller being mounted on an axle which is located in the recess. The axle may be formed from steel, for example medium strength stainless steel.

Furthermore, the recess may extend through the block from the lower surface to the upper surface.

It is appreciated that the luggage space of a vehicle is a harsh environment and that the channels in which the sliders have to slide are likely to become dirty. If grit and debris comes into contact with the roller, the roller could stall or jam and the force required to slide the luggage tray would be excessive. A skirt is provided at each end of the block, each skirt extending below the lower surface of the body portion. The skirts prevent pieces of grit and debris becoming jammed in the roller or rollers to allow the roller or rollers to run freely. In use, the skirts contact the load support surface. Accordingly, the skirts may be used to sweep dirt along the elongate support element.

To minimise the amount of dirt coming into contact with the rollers, the cross-section of the block and the skirts is shaped to correspond to the profile of the channel in which they slide when in use.

The skirts may be formed of a material which wears easily to take the shape of the channel.

The block may be formed from a plastics material. Furthermore, the block may be formed from a solid polymer, for example an oil-filled polymer, a solid lubricant filled polymer or a self-lubricating polymer to minimise friction between the block and the support element. The polymer may be Nylatron (molybdenum filled nylon). Alternatively, the block may be formed from PTFE. Furthermore, the block may be extruded or moulded, for example, injection moulded. The skirt and the block may be moulded as a single piece. Alternatively, the skirt may be connected to the block after formation of the block. For example, the skirt may comprise a brush which is adhered to the block.

In order to allow the block to be connected to the second body, for example the underside of a luggage tray, holes may extend through the block. The holes may be countersunk in the lower surface of the block to allow a minimum thickness of block and to prevent the means for connecting the block to the second body from contacting the support element.

The support element may comprise a steel press-formed, extruded or cold-rolled channel.

In a preferred embodiment, the assembly comprises a pair of support elements, in each of which is mounted a pair of blocks. The first body may comprise a vehicle and the two pairs of blocks may be fixed to a vehicle luggage tray.

By way of example, specific embodiments of the present invention will now be described further by way of example only and with reference to the accompanying drawings, in which:
Figure 1 is an exploded isometric view showing a luggage tray fitted with the sliding support of the present invention.
Figure 2 (i) shows an isometric view of a block not according to the present invention;
Figure 2(ii) shows a cross-sectional side view of a block not according to the present invention; and

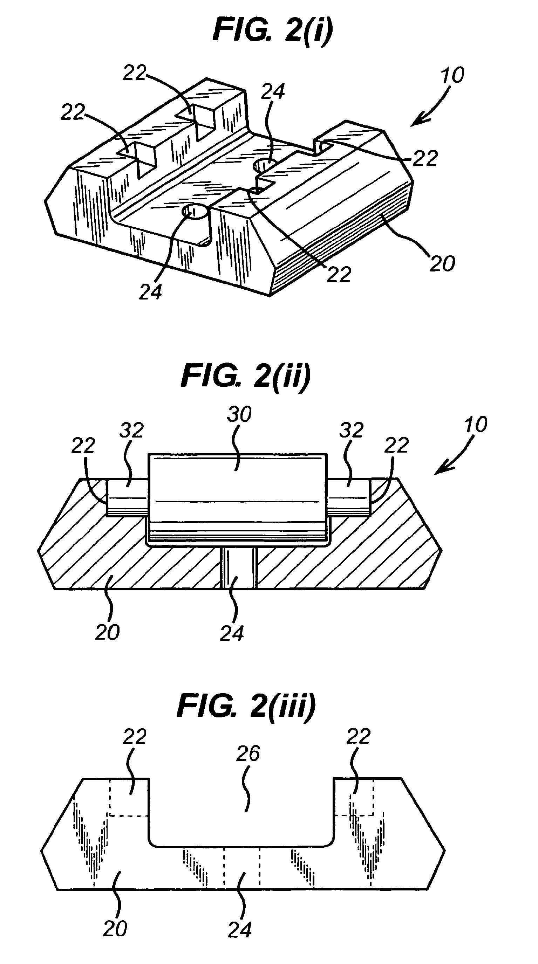

Figure 2(iii) shows a cross-sectional side view of a block not according to the present invention.

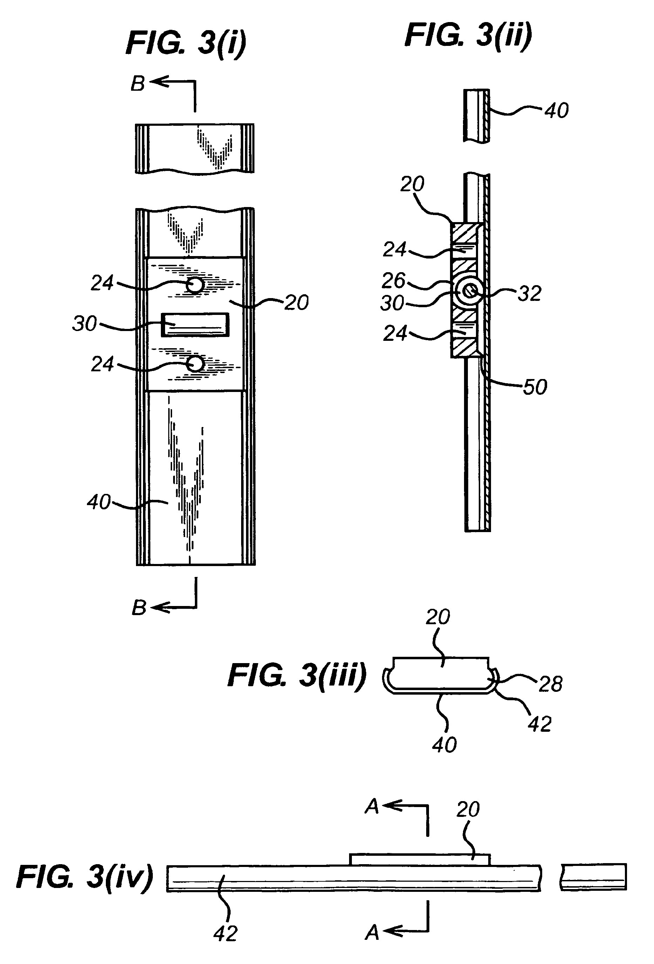

Figure 3 (i) shows a plan view of a block according to a first embodiment of the present invention when positioned in a channel;
Figure 3(ii) shows a cross-sectional side view along the line B-B of figure 3(i) of a block according to a first embodiment of the present invention when positioned in a channel;

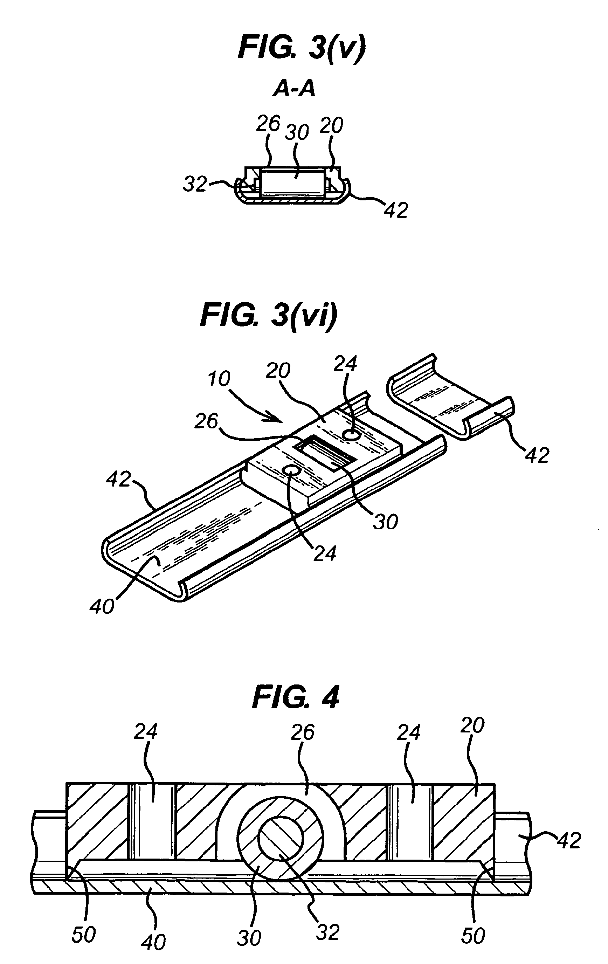

Figure 3(iii) shows an end view of a block according to a first embodiment of the present invention when positioned in a channel;
Figure 3 (iv) shows a side view of a block according to a first embodiment of the present invention when positioned in a channel;
Figure 3 (v) shows a cross-sectional end view along the line A-A of figure 3 (iv) of a block according to a first embodiment of the present invention when positioned in a channel; and
Figure 3 (vi) shows an isometric view of a block according to a first embodiment of the present invention when positioned in a channel.
Figure 4 shows an enlarged cross-sectional side view of a block according to a first embodiment of the present invention.

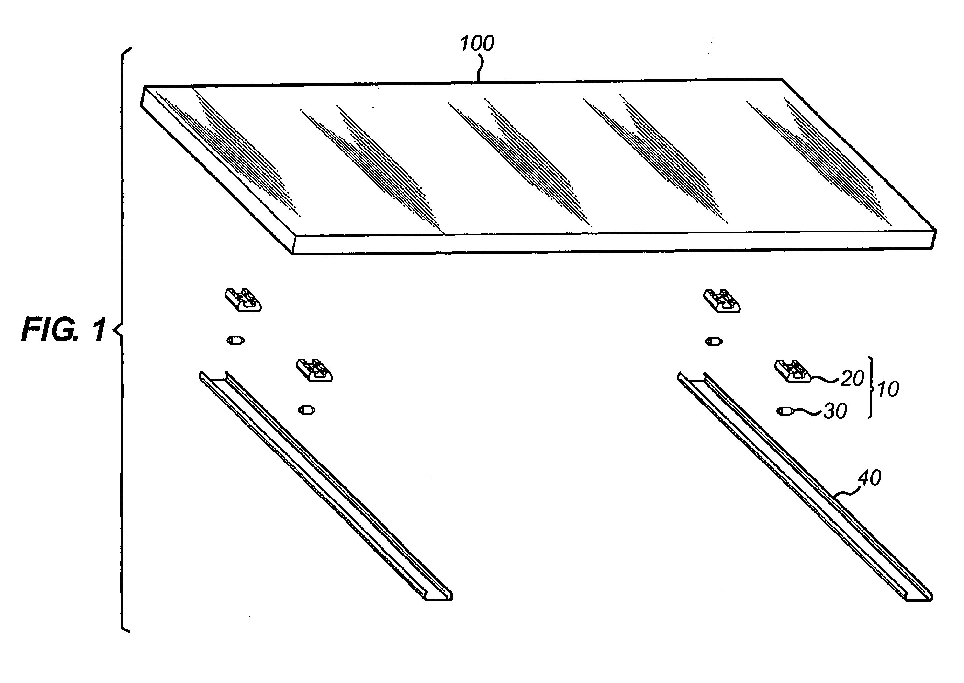

Figure 1 shows a luggage tray 100 fitted with a plurality of blocks 10 which slide within a pair of channels 40 in accordance with the present invention. The blocks 10 and channels 40 allow the luggage tray to slide. In use, the channels 40 would be fitted to the floor of the luggage compartment of the vehicle. More than two sliding supports may be used to increase load rating or stability. Three sliding supports are likely to be used in many applications.

Figure 2 shows a block 10 not according to the present invention. The block comprises a body portion 20 with a cross-section which is shaped to fit within a channel. The body portion is provided with two pairs of cut-outs 22 for housing a pair of axles 32. On each axle 32 is mounted a roller 30. At least a portion of the rollers 30 extend out of the recess 26 formed in the body portion 20. In addition, a pair of holes 24 are provided in the housing portion. The holes are used to accommodate a pair of rivets or screws in order to attach the block to an article, for example a luggage tray, which is to slide relative to the channel.

Figure 3 shows a block 10 according to a first embodiment of the invention which is positioned in a channel 40. The channel 40 is of steel, for example cold rolled steel, but could be of other suitable material. The block 10 includes a body portion 20 in which is formed a recess 26 that extends through the entire thickness of the body portion 26. A roller 30 mounted on an axle 32 is mounted within the recess 26 such that at least a part of the roller extends beyond the lower surface of the body portion. The roller contacts a load support surface provided by the web of the channel 40 and any load applied to the block 10 bears against the channel 40 via the roller 30. A pair of holes 24 are also formed in the body portion 24 which are used to accommodate a pair of rivets or screws in order to attach the block to a portion, for example to a luggage tray, which is to slide relative to the channel.

The channel 40 has C-shaped flanges 42 and the body portion of the block has corresponding C-shaped edges 28 which fit within the flanges of the channel and prevent lateral and vertical movement of the block within the channel. As can be seen from figure 3 (iv) in particular, the overall thickness of the block is only slightly larger than the depth of the flanges of the channel 40. Consequently, when used to mount a luggage tray, the volume of luggage space lost to the sliding mechanism is small. The channel is attached to a body such as a vehicle loading bay by screws, rivets or other suitable fixings.

Figure 4 shows a block of the first embodiment provided with a skirt 50 at both ends. Each skirt 50 extends below the block to the same extent as the roller. The skirts 50 are present to sweep any dirt out of the path of the roller. The skirts 50 bear only a very minimal load. The skirts are designed so that their bottom edges wear easily. Consequently, the skirts take the shape of the channel in which the block is mounted and efficiently sweep away any grit or debris.

Skirt 50 is shown integrally formed with the block 20 in figure 4. However, the skirts, which may take the form of brushes, may be attached to the block after formation by adhesive.

The block is ideally of plastics material such as a polymer, for example an oil-filled polymer, a solid lubricant filled polymer or a self lubricating polymer to minimise frictional resistance. Suitable materials are molybdenum filled nylon or PTFE. The block may be extruded or moulded.

The blocks of the present invention offer a number of advantages over the known prior art. The blocks are significantly less bulky than previously known apparatus and therefore reduce the amount of lost luggage space when used to mount luggage trays. The blocks are also sufficiently strong to sustain loads stored in a luggage compartment of a vehicle. Furthermore, friction between the blocks and the channels is sufficiently small to allow the blocks to slide within the channel without a substantial force being required.

Although the present invention has been described for use with a luggage tray in a vehicle, it will be appreciated that the present disclosure is not so limited and that the sliding support can be used in a number of other situations.

## Claims

1. A sliding support comprising:
an elongate support element (40) of channel section; and
a block (10), the block (10), in use, being retainingly engaged with and slidably supported on the support element (40), wherein
a base of the channel section support element (40) comprises a load support surface,
the block (10) has a roller (30) mounted thereon to provide load bearing contact with the load support surface to support the block (10), in order to reduce frictional resistance when the block (10) slides along the support element (40),
**characterised in that**
the block (10) has a body portion (20), and a skirt (50) at each end of the body portion (20), each skirt (50) extending between the body portion (20) and the base of the support element (40), and
the cross-section of the body portion (20) and the skirts (50) is shaped to correspond to the profile of the channel section support element (40).

2. A sliding support as claimed in claim 1 wherein the block (10) includes a plurality of rollers (30) for contacting the load support surface of the support element (40).

3. A sliding support as claimed in claim 1 or claim 2 including a plurality of spaced apart blocks (10).

4. A sliding support as claimed in any of claims 1 to 3 wherein the load support surface of the support element (40) is planar.

5. A sliding support as claimed in claim 1 wherein the channel section includes side walls (42) which converge towards their free edges, the block (10) being retained by engagement within the channel section such that material of the block (10) engages the side walls (42) of the channel.

6. A sliding support as claimed in any one of claims 1 to 5 wherein the or each roller (30) is formed from a plastics material.

7. A sliding support as claimed in any one of claims 1 to 6 wherein the block (10) includes a recess (26), the roller (30) being mounted on an axle (32) which is located in the recess (26).

8. A sliding support as claimed in claim 7, wherein the recess (26) extends through the block (10) from a lower surface of the block (10) to an upper surface of the block (10).

9. A sliding support as claimed in any of claims 1 to 8 wherein the elongate support element (40) is suitable for fixing to a first body.

10. A sliding support as claimed in any of claims 1 to 9 wherein the block (10) is suitable for fixing to a second body.

11. A sliding support as claimed in any of claims 1 to 8 wherein the elongate support element (40) is formed integrally with a first body.

12. A sliding support as claimed in any of claims 1 to 8 or 11 wherein the block (10) is formed integrally with a second body.

13. A sliding support as claimed in claim 10 or 12 wherein the second body is a luggage tray.

## Patentansprüche

1. Gleitträger, mit:
einem länglichen Tragelement (40) von U-Profil-Form; und
einem Block (10), wobei der Block (10) im Gebrauch mit dem Tragelement (40) in aufgenommener Weise in Eingriff steht und an dem Tragelement (40) gleitend getragen ist, wobei
eine Basis des U-Profil-Tragelements (40) eine Lasttrageoberfläche aufweist,
wobei der Block (10) eine Rolle (30) aufweist, die an ihm angebracht ist, um für eine lastlagernde Berührung mit der Lasttrageoberfläche zum Tragen des Blocks (10) zu sorgen, um einen Reibungswiderstand zu vermindern, wenn der Block (10) entlang dem Tragelement (40) gleitet,
**dadurch gekennzeichnet, dass**
der Block (10) einen Körperabschnitt (20) und eine Schürze (50) an jedem Ende des Körperabschnitts (20) aufweist, wobei jede Schürze (50) sich zwischen dem Körperabschnitt (20) und der Basis des Tragelements (40) erstreckt, und dass
der Querschnitt des Körperabschnitts (20) und der Schürzen (50) so geformt ist, dass er dem Profil des U-Profil-Tragelements (40) entspricht.

2. Gleitträger nach Anspruch 1, wobei der Block (10) eine Mehrzahl von Rollen (30) zum Berühren der Lasttrageoberfläche des Tragelements (40) aufweist.

3. Gleitträger nach Anspruch 1 oder Anspruch 2, mit einer Mehrzahl von beabstandeteten Blöcken (10).

4. Gleitträger nach einem der Ansprüche 1 bis 3, wobei die Lasttrageoberfläche des Tragelements (40) eben ist.

5. Gleitträger nach Anspruch 1, wobei das U-Profil Seitenwände (42) aufweist, die zu ihren freien Enden hin konvergieren, wobei der Block (10) durch Eingriff mit dem U-Profil so aufgenommen ist, dass Material des Blockes (10) mit den Seitenwänden (42) des Kanals in Eingriff steht.

6. Gleitträger nach einem der Ansprüche 1 bis 5, wobei die oder jede Rolle (30) aus Kunststoffmaterial gebildet ist.

7. Gleitträger nach einem der Ansprüche 1 bis 6, wobei der Block (10) eine Ausnehmung (26) aufweist, wobei die Rolle (30) auf einem Achszapfen (32) angebracht ist, der in der Ausnehmung (26) angeordnet ist.

8. Gleitträger nach Anspruch 7, wobei die Ausnehmung (26) sich durch den Block (10) von einer unteren Oberfläche des Blocks (10) zu einer oberen Oberfläche des Blocks (10) erstreckt.

9. Gleitträger nach einem der Ansprüche 1 bis 8, wobei das längliche Tragelement (40) zur Befestigung an einem ersten Körper geeignet ist.

10. Gleitträger nach einem der Ansprüche 1 bis 9, wobei der Block (10) zur Befestigung an einem zweiten Körper geeignet ist.

11. Gleitträger nach einem der Ansprüche 1 bis 8, wobei das längliche Tragelement (40) integral mit einem ersten Körper ausgebildet ist.

12. Gleitträger nach einem der Ansprüche 1 bis 8 oder 11, wobei der Block (10) integral mit einem zweiten Körper ausgebildet ist.

13. Gleitträger nach Anspruch 10 oder 12, wobei der zweite Körper eine Gepäckablage ist.

## Revendications

1. Support à glissière comprenant :
un élément de support allongé (40) à section en U formant un canal; et
un bloc (10), le bloc (10), en utilisation, étant mis en prise avec l'élément de support de manière à être retenue par celui-ci et étant supporté à coulissement sur l'élément de support (40), dans lequel
une base de l'élément de support à section en U (40) comprend une surface de support de charge,
le bloc (10) comporte un galet (30) monté sur celui-ci pour fournir un contact de support de charge avec la surface du support de charge pour supporter le bloc (10), afin de réduire la résistance de friction quand le bloc (10) coulisse le long de l'élément de support (40),
**caractérisé en ce que** le bloc (10) comporte une partie de corps (20), et une jupe (50) à chaque extrémité de la partie du corps (20), chaque jupe (50) s'étendant entre la partie de corps (20) et la base de l'élément de support (40), et
la section transversale de la partie de corps (20) et des jupes (50) présente une forme correspondante au profil de l'élément de support à section en U (40).

2. Support à glissière selon la revendication 1, dans lequel le bloc (10) comprend une pluralité de galets (30) propres à entrer en contact avec la surface du support de charge de l'élément de support (40).

3. Support à glissière selon la revendication 1 ou la revendication 2 comprenant une pluralité de blocs (10) espacés les uns des autres.

4. Support à glissière selon l'une quelconque des revendications 1 à 3, dans lequel la surface de support de charge de l'élément de support (40) est plane.

5. Support à glissière selon la revendication 1, dans lequel la section en U comprend des parois latérales (42) qui convergent en direction de leurs bords libres, le bloc (10) étant retenu par mise en prise dans la section en U de sorte que le matériau du bloc (10) soit en prise avec les parois latérales (42) du canal en forme de U.

6. Support à glissière selon l'une quelconque des revendications 1 à 5, dans lequel le galet ou chaque galet (30) est formé à partir d'une matière plastique.

7. Support à glissière selon l'une quelconque des revendications 1 à 6, dans lequel le bloc (10) comprend un évidement (26), le galet (30) étant monté sur un axe (32) qui est situé dans l'évidement (26).

8. Support à glissière selon la revendication 7, dans lequel l'évidement (26) s'étend à travers le bloc (10) à partir d'une surface inférieure du bloc (10) jusqu'à une surface supérieure du bloc (10).

9. Support à glissière selon l'une quelconque des revendications 1 à 8, dans lequel l'élément de support allongé (40) est propre à être fixé à un premier corps.

10. Support à glissière selon l'une quelconque des revendications 1 à 9, dans lequel le bloc, (10) est propre à être fixé à un deuxième corps.

11. Support à glissière selon l'une quelconque des revendications 1 à 8, dans lequel l'élément de support allongé (40) est formé d'un seul tenant avec un premier corps.

12. Support à glissière selon l'une quelconque des revendications 1 à 8 ou 11, dans lequel le bloc (10) est formé d'un seul tenant avec un deuxième corps.

13. Support à glissière selon la revendication 10 ou 12, dans lequel le deuxième corps est un plateau à bagages.
